# EUROPEAN PATENT SPECIFICATION

(11) **EP 1 875 032 B1**
(45) Date of publication and mention of the grant of the patent: **01.09.2010**
(21) Application number: 06742710.4
(22) Date of filing: 26.04.2006
(51) Int. Cl.: E21B 10/44, B23B 51/02

(54) **A DRILLING TOOL**
BOHRWERKZEUG
OUTIL DE PERÇAGE

(30) Priority: 28.04.2005 DK 200500628
(43) Date of publication of application: 09.01.2008
(73) Proprietor: Irwin Industrial Tool Company A/S, 2650 Hvidovre (DK)
(72) Inventor: PEDERSEN, Hans, Christian, Dk-7760 Hurup (DK)
(74) Representative: Schmid, Nils T.F.
(86) International application number: PCT/EP2006/003887
(87) International publication number: WO 2006/114306

(56) References cited:
- EP-A- 0 361 189
- EP-A- 1 217 165
- DE-A1- 3 020 284
- DE-A1- 19 703 994
- US-A- 3 878 905
- US-A- 5 492 187
- US-A- 6 129 162

## Description

### Field of the Invention

The present invention relates to a drilling tool, such as a rotary hammer drill or another drill of the percussive type, in particular a masonry or rock drilling tool.

### Background of the Invention

Masonry or rock drilling tools generally comprises a shank part adapted to be received In a tool holder or chuck, an axially opposite drill head having a free end surface defining one or more cutting edges, and a conveying part interconnecting said shank part and said drill head and defining a number of helical flutes opening into said free end surface of the drill head. The drill head may comprise a diametrically extending main cutting edge defining a central tip, and a pair of auxiliary cutting edges extending radially in relation to the tip and defining with the main cutting edge a pair of opposite obtuse angles so as to define a pair of opposite sectors of said free end surface. The cutting edges is usually defined by cutting plates or elements made separately from cemented or sintered carbide and received 2in a diametric channels or grooves formed in the free end surface of the drill head. Drilling tools of this type are disclosed for example In EP-A- 657,617, EP-A-1,405,984, DE-A-195 37 900, and DE-A-197 03 994.

In US 6,129,162 a drilling tool according to the preamble of independent claim 1 is disclosed.

### Summary of the Invention

These known drilling tools generally operate satisfactory in many respects. It would, however, be desirable to improve these known drills so as to obtain a higher efficiency as far as drilling speed is concerned. The object of the invention is to obtain such Improvement.

The present invention provides a drill or drilling tool of the above type comprising a shank part adapted to be received in a tool holder, an axially opposite drill head having a free end surface defining a diametrically extending main cutting edge defining a central tip, and a pair of auxiliary cutting edges extending radially in relation to the tip and defining with the main cutting edge a pair of opposite obtuse angles so as to define a pair of opposite sectors of said free end surface, and a conveying part interconnecting said shank part and said drill head and defining a number of helical flutes opening into said opposite obtuse angled sectors, and the drill according to the invention is **characterised in that** the conveying part defines two helical flutes only each opening into a respective one of said obtuse angled sectors, and that the cross sectional area of the flutes amounts to 45 - 55 % of the total circular cross-sectional area of the conveying part of the drill.

It has been found that a substantial limiting factor concerning the speed at which a bore hole of a certain length or depth may be drilled in masonry or concrete is the speed at which material cut or loosened by the cutting edges - so-called bore meal - may be removed from the free active end of the drill head. According to the invention a substantial improvement may be obtained by increasing the total cross-sectional area of the flutes of the drill, so that this area amounts to 45 - 55 % of the total circular cross-sectional area (at right angles to the longitudinal axis of the drill) of the conveying part of the drill, which means that the cross-sectional area of the solid part of the drill amounts to only 55 - 45 % of the circular cross-sectional drill area. In order to obtain such cross-sectional flute area and to reduce the frictional forces to which the bore meal is exposed, only two helical flutes are used.

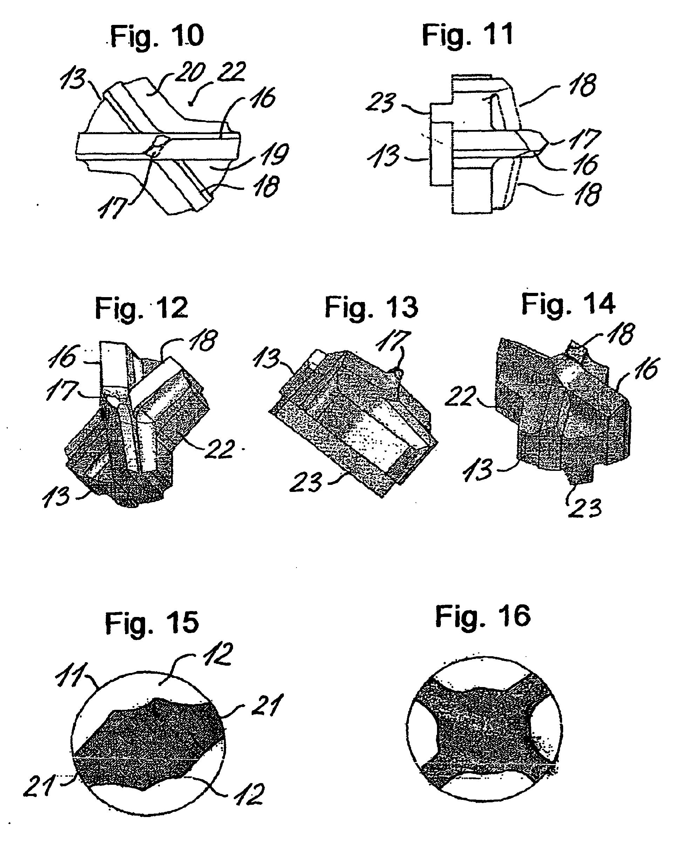

Advantageously, the total cross-sectional area of the two helical flutes amounts to 45 - 50 % and preferably to 48 - 49 % of the total circular area of the conveying part of the drill. In the preferred embodiment the outline or contour of the cross-sectional shape of the solid part of the conveying part is generally outwardly convex as shown in Fig. 15 of the drawings, and this generally convexly shaped outline may include slightly concavely curved contour parts. As shown in Fig. 15 the cross-sectional shape of the solid part, including a drill core and a pair of diametrically oppositely extending helical webs or ribs separating the flutes may have an outline substantially being an octagon.

The helical flutes must open into the free end surface of the drill head. Therefore, each of the two flutes preferably comprises an inlet portion, which extends axially in a direction defining an angle between 0° and 10° with the longitudinal direction of the drill, and each of these inlet portions opens into a respective one of said obtuse angled sectors. It is important that each of these inlet portions of the helical flutes has a cross-sectional area which is not smaller than the cross-sectional are of the other parts of the flute. In order to obtain the desired cross-sectional area each of the inlet portions at the open end thereof preferably has an angular cross-sectional shape defining an obtuse angle, which may, for example be 135° - 150°, and in a preferred embodiment the cross-sectional area of each inlet portion is substantially the same as the cross-sectional area of each helical flute. In order to reduce the friction to which the bore meal is exposed, the vertex of the obtuse angle defined by the cross-sectional shape of the inlet portion is preferably suitably rounded.

Preferably, the main cutting edge extends slightly axially beyond the auxiliary cutting edges. Furthermore, each of the obtuse angles defined by the main and auxiliary cutting edges should be sufficiently large to allow a sufficient cross-sectional area of each flute inlet portion. Thus, each of the obtuse angles defined by the cutting edges could be 125° - 145°, preferably 127° - 140°, such as about 130°.

It has also been found that the axial extension of the inlet portions should be kept relatively short. Thus, the axial length or extension of the inlet portion should preferably not be more than 25 - 35 % of the axial width of each of the helical flutes.

Another factor influencing the transportation of bore meal along the helical flutes is the pitch of the flutes which should be suitably small. Thus, according to the invention the pitch angle of the helical flutes should be only 30° - 45° and preferably 35° - 40°.

As mentioned above, the cutting edges may be defined by cutting plates or members made separately from cemented or sintered carbide and received in a diametric channels or grooves formed in the free end surface of the drill head as well known in the art. Alternatively, the drill head with the main cutting edge and the auxiliary cutting edges may be made from cemented or sintered carbide as a separate integral part, which has been fastened to a free end of the conveying part in a manner disclosed in the co-pending Danish patent application No. PA 2005 00225. Thus, the cutting members may form a drill head having an abutment surface formed thereon covering and engaging with the free end surface of the conveying part, the drill head defining flute surfaces each extending between a respective one of said radially extending cutting edges and an adjacent end of a respective one of the flutes of the conveying part.

In such drilling tool the drill head forms the free cutting end part of the tool and covers the adjacent end surface of the conveying part. This means that the cutting edges, the peripheral tool guiding surfaces and the surfaces guiding the cut material or bore meal from the cutting edges into the flutes or channels of the conveying part tool may be formed with increased degree of freedom and therefore may come more closely to an optimum result. Furthermore, because of the substantially increased abutting surface between the drill head or cutting member and the conveying part a more durable connection with increased strength may be obtained, and because the free end part of the tool, which is exposed to the percussive contact with the bottom of the hole being drilled, is made from the more resistant material of the drill head the effective service life of the tool is considerably increased.

The separately formed drill head may be made from any wear resistant material conventionally used for cutting members or plates of masonry drills, such as cemented or sintered carbide. In principle, the abutment surface of the drill head and the end surface of the conveying part may be different provided that the end surface is covered by the abutment surface. However, preferably these surfaces are complementary and have substantially congruent outlines.

In order to increase the strength of the connection between the drill head and the conveying part, the inter-engaging surfaces thereof may be provided with mating projections and depressions. As an example, a tongue formed on the abutment surface of the drill head may engage with a diametrically extending groove defined in the end surface of the conveying part.

### Brief description of the drawings

The invention will now be further described with reference to the drawings, wherein
Figs. 1 and 2 are side views of part of a first embodiment of a hammer drill according to the invention,
Fig. 3 is an end view of the drill head shown in Figs. 1 and 2,
Figs. 4 and 5 are side views of a second embodiment of a hammer drill according to the invention,
Figs. 6 is an end view of the drill head shown in Figs. 4 and 5,
Figs. 7 and 8 are side views of a third embodiment of a hammer drill according to the invention,
Fig. 9 is an end view of the drill head shown in Figs. 7 and 8,
Figs. 10 - 14 are perspective views of the drill head of the hammer drill shown in Figs. 7 - 9,
Fig. 15 is a cross-sectional view of the conveying part of any of the embodiments shown in Figs. 1 - 9, and
Fig. 16 is a cross-sectional view of the conveying part of a known, comparable hammer drill.

### Description of a preferred embodiment

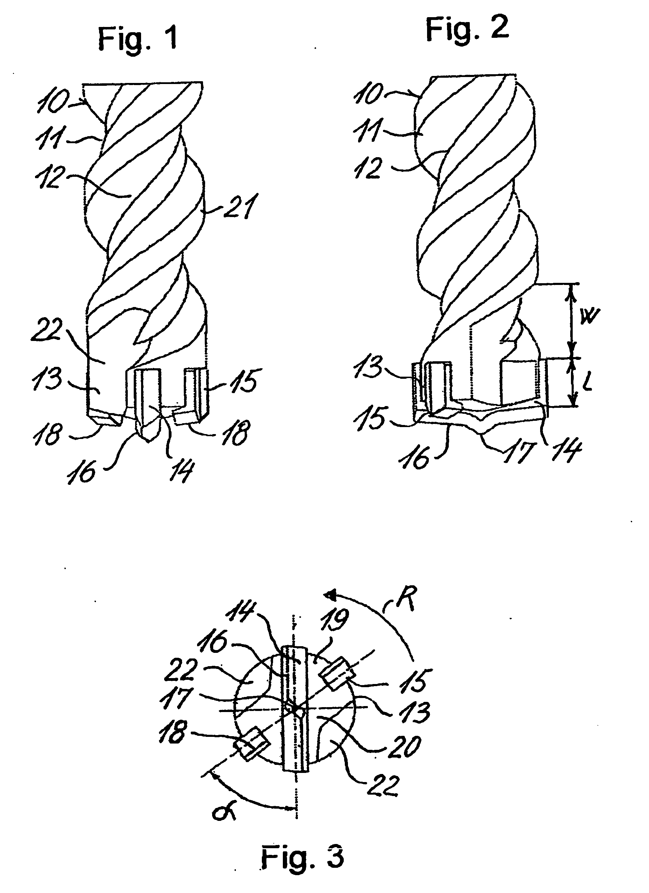

The hammer drill embodiments 10 shown in the drawings comprise a shank part (not shown) to be received in a drill holder or chuck of a drilling machine, an intermediate conveying part 11 defining a pair of helical flutes or grooves 12, and a drill head 13. In the embodiments shown in Figs. 1 - 6 the shank part, the conveying part 11, and the drill head 13 are integrally formed, preferably from steel, and a diametrically extending main cutting plate 14 and a pair of diametrically opposite auxiliary cutting plates 15 are mounted in the free end surface of the drill head 13 in a conventional manner, for example by brazing. The main and auxiliary cutting plates 14, 15 are made from cemented or sintered carbide or a similar hard cutting material. The main cutting plate 14 defines a diametrically extending main cutting edge 16 and a central tip 17, while the auxiliary plates 15 define a pair of radially extending auxiliary cutting edges 18. The diametrical length of the main cutting plate 14 slightly exceeds the diameter of the conveying part 11 and of the drill head 13, and the radially outer ends of the auxiliary cutting plates 15 also extend slightly beyond the circumference of drill head 13, so that the diameter of a cylindrical hole being drilled is determined by the cutting plates 14, 15.

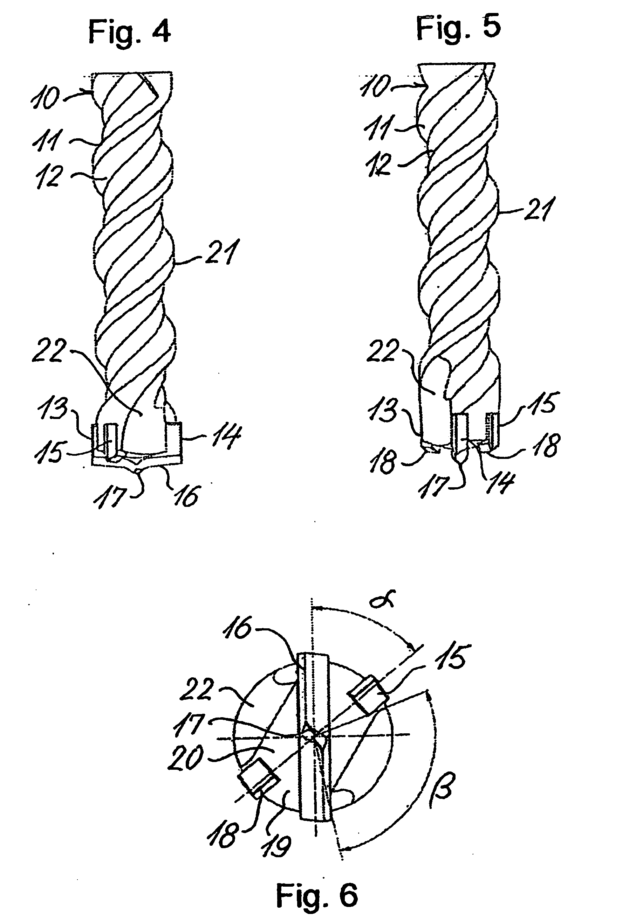

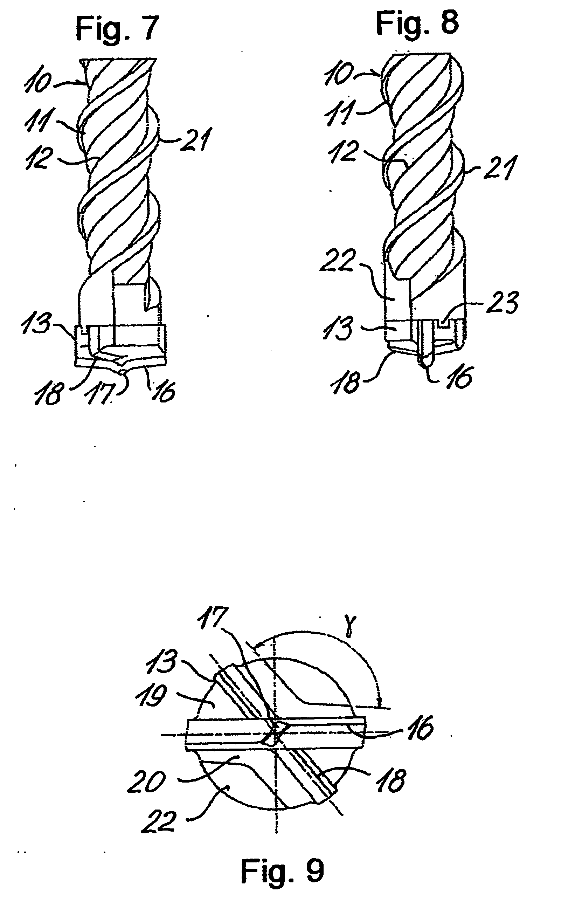

The crossing cutting edges 16 and 18 divide the end surface of the drill head 13 into a pair of acute sectors 19 and a pair of obtuse sectors 20 of a circle. The acute angle α (Figs. 3 and 6) may, for example, be 35° - 55°, which means that each of the obtuse sectors may define an angle of 125° - 145°. The two identical helical flutes 12, which are separated by a pair of webs 21, may have a cross-sectional shape as shown in Fig. 15, so that the cross-sectional area of the two flutes amounts to about half the total circular cross-sectional area of the conveying part 11 of the drill or more. The flutes 12 open into each one of the obtuse sectors 20 via an inlet portion 22. In the embodiments shown in Figs. 1 - 3 and 7 - 9 the opening of the inlet portion 22 has a cross-sectional shape like an obtuse angle (γ) (Fig. 9), and the inlet portion is merging smoothly into the flute shape illustrated in Fig. 15. Preferably the obtuse angle γ is 135° - 150°. The inlet portion 22 may extend in an axial direction or define a small acute angle with the axial direction. The axial length I of the inlet portion 22 is kept as small as possible and is, for example, only about a fourth of the axial width w of each of the flutes 12, vide Fig. 2.

The embodiment shown in Figs. 4 - 6 deviates from the embodiment according to figs. 1 - 3 by the shape of the flute inlet portions 22. Thus, instead of an obtuse angle the cross-sectional shape of the opening of inlet portion 22 in Fig. 6 is generally a segment of a circle extending over an angle β amounting to 85° - 105°, preferably about 95°. Also in this embodiment each inlet portion smoothly merges into the corresponding flute 12. In the embodiment shown in Figs. 7 - 8 the drill head 13 and the cutting edges are formed as an integral unit from cemented or sintered carbide or a similar hard cutting material. The drill head is connected to a free end surface of the conveying part 11 by means of a groove/tongue connection 23 and/or by brazing. The adjoining end surfaces of the conveying part 11 and the drill head 13, respectively, have substantially identical outlines such that they are in abutting engagement and cover each other when the drill head 13 has been mounted on the conveying part 11.

In the embodiment shown in Figs. 7 - 14, the auxiliary cutting edges 15 are extending radially inwardly almost to the dome or tip 17, so that the main cutting edge 16 and the auxiliary cutting edges 18 define an X or a cross.

When the drill 10 is used for drilling a bore in masonry or concrete and is rotated in a direction indicated by an arrow R the percussive and rotational movement of the cutting edges 16, 18 causes loosening of masonry or concrete material whereby so-called bore meal is formed. It is important that the helical flutes 12 and their inlet portions 22 are dimensioned and shaped such that the bore meal is continuously transported away from the cutting edges 16, 18 as soon as it is formed so that squeezing and crushing of the bore meal particles are avoided, because finely divided bore meal tends to pack around the drill head and along the length of the flutes, whereby the percussive effect and thus the drilling efficiency is substantially reduced.

An efficient transport of the bore meal away from the cutting edges is obtained by forming the flutes 12 and their inlet portions 22 with relatively large cross-sectional areas, by making the axial length I of the inlet portions relatively short, and by carefully selecting the pitch angle of the flutes within the range of 30° - 45°, preferably 35° - 40°.

### Comparative Example

The performance of a drill according to the invention as that illustrated in Figs. 1 - 3 and 15 ( Invention) was compared with a known drill as that illustrated in Figs. 1 - 6 of EP-A-1 405 984 (Prior Art). The cross-sectional shapes of the drills being tested are shown in Figs. 15 (Invention) and 16 (Prior Art).

The drills were tested in a drill testing apparatus, Räbel No. 334/04, in connection with a concrete block having the dimensions 600 x 800 x 250 mm and having a compressive strength of 40 MN. A drilling machine HILTI TE 76 for receiving the drills was arranged horizontally on a movable carriage, and the system also comprised a computer for collecting relevant data.
The apparatus was operated as follows:
Before start of each drilling operation for each of the drills being tested the drilling machine with the drill arranged therein was advanced towards the concrete block till the drill head came into contact with the block. Then a depth gauge of the apparatus was reset. The movable carriage with the drilling machine was then advanced with a specified force, and every ten seconds data, such as drilling speed measured in mm, bore depth, etc, were measured and registered by the apparatus.

Each of the two drills being tested were used for drilling 104 bore holes having an accumulated depth of 40 m, and average values for the parameters measured were calculated only for the 5^{th} -14^{th} and the 95^{th} - 104^{th} of the 104 holes drilled. The following average values for the drilling of these bore holes were calculated:

| | Invention | Prior Art |
|---|---|---|
| Drill diameter | 22.0 mm | 22.0 mm |
| Number of flutes | 2 | 4 |
| Flute pitch angle | 40° | 50° |
| Cross-sectional flute area | 48.5 % | 43% |
| Axial length I of inlet portion | 9.0 mm | 9.0 and 25.5 mm |
| Cross-sectional angle of the cutting edges | 138° | 138° |

The above test results show that under the same conditions the drill according to the invention has a drilling speed, which is about 20% higher than the drilling speed of the prior art drill tested. Because the drill diameter and the cutting angle are identical for the drills being tested, the considerable improvement obtained by the drill according to the invention must result from the other parameters, such as cross-sectional flute area, flute pitch angle, and axial length I of inlet portion 22.

It should be understood that various changes and modifications of the embodiments of the drills according to the invention shown and described herein could be made within the scope of the present invention as defined in the appended claims. As an example, the dill head illustrated in Figs. 9 - 14 gives high degree of freedom in designing the drill head according to the invention and allows an optimum design of the cutting edges, an efficient removal of loosened material or bore meal from the drill head and at the same time a very high strength of the drill head. It is also clear that the drill head 13 may be shaped in any other convenient way than that shown and described within the scope defined by the attached claims.

## Claims

1. A drill comprising
- a shank part adapted to be received in a tool holder,
- an axially opposite drill head (13) having a free end surface defining a diametrically extending main cutting edge (16) defining a central tip (17), and a pair of auxiliary cutting edges (18) extending radially in relation to the tip and defining with the main cutting edge a pair of opposite obtuse angles (180° - α) so as to define a pair of opposite sectors (20) of said free end surface, and
- a conveying part (11) interconnecting said shank part and said drill head (13) and defining a number of helical flutes opening into said opposite obtuse angled sectors, wherein the conveying part (11) defines two helical flutes (12) only each opening into a respective one of said obtuse angled sectors (20), wherein the contour of the cross-sectional shape of the conveying part (11) is substantially outwardly convex,
**characterized in** the cross sectional area of the flutes amounts to 45 - 55 % of the total circular cross-sectional area of the conveying part (11) of the drill, the convexly shaped outline of the conveying part includes concavely-curved contour parts, and the cross-section of the conveying part (11) is shaped substantially like an octagon.

2. A drill according to claim 1, wherein the cross sectional area of the flutes (12) amounts to 45 - 50%, preferably 48 - 49% of the total circular cross-sectional area of the conveying part (11) of the drill.

3. A drill according to any of the claims 1- 2, wherein each of the two flutes (12) comprises an inlet portion (22) extending in a direction defining an angle between 0° and 10° with the longitudinal direction of the drill and opening into said obtuse angled sector (20).

4. A drill according to claim 3, wherein each inlet portion (22) has an angular cross-sectional shape defining an obtuse angle at the open end of the inlet portion.

5. A drill according to claim 3 or 4, wherein the cross-sectional area of each inlet portion (22) is substantially the same as the cross-sectional area of each helical flute (12).

6. A drill according to claim 4 or 5, wherein the obtuse angle (y) defined by the cross-sectional shape of each inlet portion (22) is 135° - 150°.

7. A drill according to claim 4 or 6, wherein the vertex of the obtuse angle defined by the cross-sectional shape of the inlet portion (22) is rounded.

8. A drill according to any of the claims 1 - 7, wherein each of the obtuse angels defined by the cutting edges (16, 18) is 125° - 145°, preferably 127° - 140°, such as about 130°.

9. A drill according to any of the claims 1 to 8, wherein the main cutting edge (16) extends slightly axially beyond the auxiliary cutting edges (18).

10. A drill according to any of the claims 1 - 9, wherein the pitch angle of the helical flutes (12) is 30° - 45°, preferably 35° - 40°.

11. A drill according to any of the claims 1 -10, wherein the drill head (13) with the main cutting edge (16) and the auxiliary cutting edges (18) is made from cemented or sintered carbide as a separate integral part, which has been fastened to a free end of the conveying part (11).

## Patentansprüche

1. Bohrer umfassend
- einen Schaftteil, der angepasst ist, um in einem Werkzeughalter aufgenommen zu sein,
- einen axial gegenüber liegenden Bohrkopf (13) mit einer freien Endfläche, die eine sich diametral erstreckende Hauptschneidkante (16) definiert, die eine zentrale Spitze (17) definiert, und mit einem Paar Hilfsschneidkanten (18), die sich in Bezug auf die Spitze radial wegerstrecken und mit der Hauptschneidkante ein Paar gegenüberliegende stumpfe Winkel (180°-α) festlegen, um ein Paar gegenüberliegende Sektoren (20) der freien Endfläche zu definieren, und
- einen Förderteil (11), der den Schaftteil und den Bohrkopf (13) miteinander verbindet und eine Anzahl spiralförmiger Nuten definiert, die sich in die gegenüberliegenden stumpfwinkligen Sektoren hinein öffnen, wobei der Förderteil (11) nur zwei spiralförmige Nuten (12) definiert, von denen sich jede in einen jeweiligen der stumpfwinkligen Sektoren (20) öffnet, wobei die Kontur der Querschnittsform des Förderteils (11) im Wesentlichen nach außen konvex ist,
**dadurch gekennzeichnet, dass** sich die Querschnittsfläche der Nuten auf 45 % - 55 % der gesamten kreisförmigen Querschnittsfläche des Förderteils (11) des Bohrers beläuft, die konvex geformte Kontur des Förderteils konkav gekrümmte Konturabschnitte aufweist und der Querschnitt des Förderteils (11) im Wesentlichen wie ein Achteck geformt ist.

2. Bohrer nach Anspruch 1, wobei die Querschnittsfläche der Nuten (12) sich auf 45 % - 50 %, vorzugsweise 45 % - 49 % der gesamten kreisförmigen Querschnittsfläche des Förderteils (11) des Bohrers beläuft.

3. Bohrer nach einem der Ansprüche 1 oder 2, wobei jede der zwei Nuten (12) einen Einlassabschnitt (22) aufweist, der sich in einer Richtung erstreckt, die einen Winkel zwischen 0° und 10° mit der Längsrichtung des Bohrers festlegt, und sich in den stumpfwinkligen Sektor (20) öffnet.

4. Bohrer nach Anspruch 3, wobei jeder Einlassabschnitt (22) eine winkelige Querschnittsform hat, die einen stumpfen Winkel an dem offenen Ende des Einlassabschnitts definiert.

5. Bohrer nach Anspruch 3 oder 4, wobei die Querschnittsfläche jedes Einlassabschnitts (22) im Wesentlichen die gleiche wie die Querschnittsfläche jeder spiralförmigen Nut (12) ist.

6. Bohrer nach Anspruch 4 oder 5, wobei der stumpfe Winkel (y), der durch die Querschnittsform von jedem Einlassabschnitt (22) festgelegt ist, 135° - 150° beträgt.

7. Bohrer nach Anspruch 4 oder 6, wobei der Scheitel des stumpfen Winkels, der durch die Querschnittsform des Einlassabschnitts (22) definiert ist, rund ist.

8. Bohrer nach einem der Ansprüche 1 bis 7, wobei alle stumpfen Winkel, die durch die Schneidkanten (16, 18) festgelegt sind, 125° - 140° betragen, vorzugsweise 127° - 140°, wie zum Beispiel 130°.

9. Bohrer nach einem der Ansprüche 1 bis 8, wobei die Hauptschneidkante (16) sich über die Hilfsschneidkanten (18) axial leicht hinaus erstreckt.

10. Bohrer nach einem der Ansprüche 1 bis 9, wobei der Neigungswinkel der spiralförmigen Nuten (12) 30° - 45° beträgt, vorzugsweise 35° - 40°.

11. Bohrer nach einem der Ansprüche 1 bis 10, wobei der Bohrkopf (13) mit der Hauptschneidkante (16) und den Hilfsschneidkanten (18) aus Hartmetall oder gesintertem Karbid als ein separates einstückiges Teil gefertigt ist, das an einem freien Ende des Förderteils (11) befestigt ist.

## Revendications

1. Forêt comprenant
- une partie de tige adaptée pour être reçue dans un porte-outil,
- une tête de perçage (13) axialement opposée, possédant une surface terminale libre définissant un bord tranchant principal (16) s'étendant diamétralement, définissant une pointe centrale (17), et une paire de bords tranchants auxiliaires (18) s'étendant radialement par rapport à la pointe et définissant, avec le bord tranchant principal, une paire d'angles obtus opposés (180° - α), de manière à définir une paire de secteurs opposés (20) de ladite surface terminale libre, et une partie de transport (11) reliant entre elles ladite partie de tige et ladite tête de perçage (13) et définissant plusieurs cannelures hélicoïdales s'ouvrant débouchant dans des secteurs opposés à angle obtus, où la partie de transport (11) définit deux cannelures hélicoïdales (12) débouchant chacune dans l'un desdits secteurs à angle obtus (20), où le contour de la section transversale de la partie de transport (11) est substantiellement convexe vers l'extérieur,
**caractérisé en ce que**
la zone de section transversale des cannelures équivaut à 45 - 55% de la zone de section transversale circulaire totale de la partie de transport (11) du forêt, le contour convexe de la partie de transport comprend des parties de contour courbes concaves, et la section transversale de la partie de transport (11) est formée substantiellement comme un octogone.

2. Forêt selon la revendication 1, dans lequel la zone de section transversale des cannelures (12) équivaut à 45 - 50%, de préférence 48 - 48% de la zone de section transversale circulaire totale de la partie de transport (11) du forêt.

3. Forêt selon l'une quelconque des revendication 1 et 2, dans lequel chacune des deux cannelures (12) comprend une portion d'entrée (22) s'étendant dans une direction définissant un angle entre 0° et 10° avec le sens longitudinal du forêt et débouchant dans ledit secteur à angle obtus (20).

4. Forêt selon la revendication 3, dans lequel chaque portion d'entrée (22) présente une forme de section transversale angulaire, définissant un angle obtus à une extrémité ouverte de la portion d'entrée.

5. Forêt selon la revendication 3 ou 4, dans lequel la zone de section transversale de chaque portion d'entrée (22) est substantiellement la même que la zone de section transversale de chacune des cannelures hélicoïdales (12).

6. Forêt selon la revendication 4 ou 5, dans lequel l'angle obtus (y) défini par la forme de section transversale de chacune des portions d'entrée (22) mesure entre 135° et 150°.

7. Forêt selon la revendication 4 ou 6, dans lequel le vertex de l'angle obtus défini par la forme de section transversale de la portion d'entrée (22) est arrondi.

8. Forêt selon l'une quelconque des revendications 1 à 7, dans lequel chacun des angles obtus définis par les bords tranchants (16, 18) mesure entre 125° et 145°, de préférence entre 127° et 140°, par exemple environ 130°.

9. Forêt selon l'une quelconque des revendications 1 à 8, dans lequel le bord tranchant principal (16) s'étend légèrement axialement au-delà des bords tranchants auxiliaires (18).

10. Forêt selon l'une quelconque des revendications 1 à 9, dans lequel l'angle d'attaque des cannelures hélicoïdales (12) mesure entre 30° et 45°, de préférence entre 35° et 40°.

11. Forêt selon l'une quelconque des revendications 1 à 10, dans lequel la tête de perçage (13), avec le bord tranchant principal (16) et les bords tranchants auxiliaires (18), est constituée de carbures cémentés ou frittés comme partie intégrale séparée, qui a été fixée à une extrémité libre de la partie de transport (11).
